(19) Europäisches Patentamt
European Patent Office
Office européen des brevets

(11) **EP 3 594 831 A1**

(12) **EUROPÄISCHE PATENTANMELDUNG**

(43) Veröffentlichungstag:
**15.01.2020 Patentblatt 2020/03**

(51) Int Cl.:
*G06F 17/50* [(2006.01)]        *G06F 3/0484* [(2013.01)]
*G03F 7/20* [(2006.01)]          *G06F 3/01* [(2006.01)]

(21) Anmeldenummer: **18182450.9**

(22) Anmeldetag: **09.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **VOLKE - Entwicklungsring SE**
**38446 Wolfsburg (DE)**

(72) Erfinder: **Volke, Daniel**
**38440 Wolfsburg (DE)**

(74) Vertreter: **Gramm, Lins & Partner**
**Patent- und Rechtsanwälte PartGmbB**
**Theodor-Heuss-Straße 1**
**38122 Braunschweig (DE)**

(54) **VERFAHREN ZUM DARSTELLEN VON CAD-DATEN UND COMPUTERPROGRAMMPRODUKT**

(57)    Die Erfindung betrifft ein Verfahren zum Darstellen von CAD-Daten, insbesondere eines Fahrzeugs (20), die zumindest ein NURBS-Objekt in Form einer NURBS-Kurve ($K_\kappa$) enthalten, wobei jede NURBS-Kurve ($K_\kappa$) durch einen Parametersatz definiert ist, der einen Satz Kontrollpunkte $b_i$ mit i = 0, 1, ..., n, einen Polynomgrad d, Gewichte $w_i$ mit i = 0, 1, ..., n, ein Kurvenparameterwert-Intervall $I_t = [t_A, t_E]$ eines Kurvenparameterwerts $t_\tau$ und einen Trägervektor $T = \{t_{r}=0= t_A,..., t_{r=R} = t_E\}$ aufweist. Erfindungsgemäß ist vorgesehen, dass das Berechnen von Kurven-Punkten $P(t_\tau)$ von NURBS-Kurven ($K_\kappa$) aus Kurvenparameterwerten $t_\tau \in I_t$ mittels eines iterativen Verfahrens erfolgt.

Fig. 2

**Beschreibung**

Die Erfindung betrifft ein Verfahren zum Darstellen von CAD-Daten, die zumindest ein NURBS-Objekt in Form einer NURBS-Kurve enthalten, wobei jede NURBS-Kurve durch einen Parametersatz definiert ist, der einen Satz Kontrollpunkte $b_i$ mit $i = 0, 1, ..., n$, einen Polynomgrad $d$, Gewichte $w_i$ mit $i = 0, 1, ..., n$, ein Kurvenparameterwert-Intervall $I_t = [t_A, t_E]$ eines Kurvenparameterwerts $t_\tau$ und einen Trägervektor $T = \{t_{r=0} = t_A, ..., t_{r=R} = t_E\}$ aufweist.

Gemäß einem zweiten Aspekt betrifft die Erfindung ein Verfahren zum Darstellen von CAD-Daten, die zumindest ein NURBS-Objekt in Form einer NURBS-Fläche F enthalten, die durch einen Parametersatz definierbar ist, der einen Satz Kontrollpunkte $b_{i,j}$ mit $i = 0, 1, ..., n$ und $j = 0, 1, ..., m$, einen ersten Polynomgrad $d_1$, einen zweiten Polynomgrad $d_2$, Gewichte $w_{i,j}$ für jeden Kontrollpunkt $b_{i,j}$, ein u-Kurvenparameterwert-Intervall $I_u = [u_A, ..., u_E]$ eines u-Kurvenparameterwerts u, ein v-Kurvenparameterwert-Intervall $I_v = [v_A, ..., v_E]$ eines v-Kurvenparameterwerts v, einen u-Trägervektor $T_u = \{u_{p=0}, ..., u_{p=P} = u_E\}$ und einen v-Trägervektor $T_v = \{v_{q=0}, ..., v_{q=Q} = v_E\}$ aufweist, mit dem Schritt: Berechnen eines Meshs aus Mesh-Punkten S(uo,vo), insbesondere aus u-Kurvenparameterwerten des u-Kurvenparameterwert-Intervall $I_u$ und v-Kurvenparameterwerten des v-Kurvenparameterwert-Intervalls $I_v$.

Produkte, wie beispielsweise technische Anlagen, Maschinen, Fahrzeuge, Häuser und Ähnliches, werden häufig mittels CAD (computer-aided design; englisch für: rechnerunterstütztes Entwerfen) konstruiert. Dazu werden CAD-Modelle erstellt. Ein CAD-Modell enthält in der Regel eine Vielzahl an NURBS-Objekten, also Kurven oder Flächen, die mittels NURBS (non-uniform rational b-splines) dargestellt sind. Diese Form der Darstellung ist besonders speichereffizient. In anderen Worten wird wenig Speicherplatz benötigt, um eine Kurve oder eine Fläche zu charakterisieren.

Um ein NURBS-Objekt grafisch darzustellen, muss eine Vielzahl an Kurven-Punkten (für eine NURBS-Kurve) oder ein sogenanntes Mesh (für eine NURBS-Fläche) berechnet werden. In anderen Worten muss eine Vielzahl an Punkten berechnet werden, die zu dem NURBS-Objekt gehören.

Soll ein mittels CAD-Daten dargestelltes Objekt anders dargestellt werden, beispielsweise verschoben, rotiert, gestreckt, gestaucht oder geschert, was als "affin transformiert" bezeichnet wird, so muss das komplette Mesh bzw. alle Kurvenpunkte neu berechnet werden. Das erfordert bei großen CAD-Modellen beträchtliche Rechenleistung.

Soll die affine Transformation in mehreren aufeinander folgenden Teiltransformationen mit hohen Geschwindigkeiten durchgeführt werden, so kann der Fall eintreten, dass die Rechenleistung des Prozessors nicht ausreicht, um die fortschreitende affine Transformation als kontinuierliche, ruckfreie Bewegung erscheinen zu lassen. Soll das mittels CAD-Daten dargestellte Objekt beispielsweise gedreht werden und reicht die Rechenleistung nicht aus, so kommt es zu einer ruckenden Bewegung. Das ist unerwünscht.

Besonders relevant wird dieser Effekt, wenn das mittels der CAD-Daten dargestellte Objekt auf einem VR-Ausgabegerät dargestellt werden soll. VR steht für virtuelle Realität. Unter einem VR-Ausgabegerät wird beispielsweise eine VR-Brille verstanden, die sich ein Benutzer aufsetzen kann und die ein Linksaugen-Bild für das linke Auge der Person und ein Rechtsaugen-Bild für das rechte Auge des Benutzers darstellt, sodass für die Person ein dreidimensionaler Eindruck entsteht.

Bei der Ausgabe mittels eines VR-Ausgabegeräts, insbesondere einer VR-Brille, muss das von den CAD-Daten beschriebene Objekt nicht nur dann neu dargestellt werden, wenn das Objekt verändert wird, sondern auch dann, wenn der Benutzer seinen Kopf bewegt. Zudem darf die Zeit zwischen einer Bewegung des Kopfes und der Neudarstellung des Objekts eine vorgegebene Grenz-Zeit von beispielsweise 0,02 Sekunden, vorzugsweise 0,01 Sekunden, nicht überschreiten, anderenfalls kann es bei der Person zu Übelkeit kommen. Dieses Phänomen ist auch als Simulatorkrankheit bekannt. Gemäß einer bevorzugten Ausführungsform beträgt die Grenz-Zeit höchstens 0,02 Sekunden, vorzugsweise höchstens 0,01 Sekunden.

Konstruieren mittels CAD in einer virtuellen Realität ist daher so rechenaufwändig, dass es bislang als nicht realisierbar betrachtet wurde.

Der Erfindung liegt die Aufgabe zugrunde, die Darstellung von CAD-Daten effizienter zu gestalten.

Die Erfindung löst das Problem durch ein gattungsgemäßes Verfahren, bei dem das Berechnen der Kurven-Punkte von NURBS-Kurven aus Kurvenparameterwerten mittels eines iterativen Verfahrens erfolgt. Die Erfindung löst das Problem zudem durch ein gattungsgemäßes Verfahrens zum Darstellen von CAD-Daten, die zumindest ein NURBS-Objekt in Form einer NURBS-Fläche F enthalten, bei dem das Berechnen des Meshs aus Mesh-Punkten mittels eines iterativen Verfahrens erfolgt.

Insbesondere handelt es sich bei dem Verfahren um ein Verfahren zum Konstruieren eines technischen Objekts, insbesondere einer Maschine, insbesondere eines Fahrzeugs, mittels eines Rechners.

Die Erfindung löst das Problem des Weiteren durch ein Computerprogrammprodukt, das einen Kode enthält, der ein erfindungsgemäßes Verfahren kodiert. In anderen Worten ist das Computerprogrammprodukt so ausgebildet, dass es, wenn es in einen Rechner geladen wird, ein erfindungsgemäßes Verfahren ausführt. Erfindungsgemäß ist zudem ein Rechner, der eingerichtet ist zum automatischen Durchführen eines erfindungsgemäßen Verfahrens.

Die NURBS sind rekursiv definiert, wie es unten beschrieben wird. CAD-Programme nach dem Stand der Technik berechnen die Kurven-Punkte oder die Mesh-Punkte daher ebenfalls mittels eines rekursiven Verfahrens. Rekursive Verfahren sind zudem elegant zu programmieren.

Der Erfindung liegt auch die Überlegung zugrunde, dass die grundsätzliche Beschränkung einer CPU (central processing unit, englisch für Zentralrecheneinheit) hinsichtlich ihrer Rechengeschwindigkeit bei großen mittels CAD-Daten dargestellten Objekten zwangsläufig zu einer Begrenzung der Geschwindigkeit kommt, mit der das Mesh neu berechnet werden kann. Durch die Verwendung eines iterativen Verfahrens hingegen ist es möglich, die Berechnung des Meshs und/oder der Kurven-Punkte auf einem Grafikprozessor durchzuführen. Grafikprozessoren besitzen einen reduzierten Befehlssatz, der es ihnen nicht erlaubt, rekursive Rechenoperationen durchzuführen. Wird jedoch die Berechnung der Mesh-Punkte und/oder der Kurven-Punkte mittels eines iterativen Verfahrens durchgeführt, so kann die Rechenlast auf eine Vielzahl an Grafikprozessoren verteilt werden, was eine bevorzugte Ausführungsform der Erfindung darstellt.

Unter einem Grafikprozessor wird insbesondere ein Prozessor verstanden, der nicht in der Lage ist, rekursiv zu rechnen, das heißt, dass ein rekursives Verfahren auf diesem Prozessor nicht ausgeführt werden kann. Unter einer CPU wird ein Prozessor verstanden, der rekursive Rechenoperationen ausführen kann.

Vorteilhaft an der Erfindung ist zudem, dass eine Darstellung der CAD-Daten mittels eines VR-Ausgabegeräts möglich ist, wobei das Auftreten der Simulatorkrankheit deutlich weniger wahrscheinlich ist, da die Zeitverzögerung zwischen einer Bewegung beispielsweise eines Kopfs des Benutzers und der vollständigen Neu-Berechnung des Meshs in seiner neuen Lage, sofern notwendig, hinreichend kurz ist. Zudem ist die Rechenzeit für die Neu-Berechnung des Meshs für eine veränderte NURBS-Fläche oder der Kontrollpunkte für eine veränderte NURBS-Kurve so klein, dass eine interaktive Veränderung der Kontrollpunkte möglich ist. Es ist sogar möglich und stellt eine bevorzugte Ausführungsform dar, dass zwei oder mehr Benutzer gleichzeitig an jeweils unterschiedlichen Kontrollpunkten einer gemeinsamen NURBS-Fläche oder einer NURBS-Kurve arbeiten. Die Rechenleistung der Grafikprozessoren kann so gewählt werden, dass dennoch eine ruckfreie kontinuierliche Deformation des entsprechenden NURBS-Objekts darstellbar ist.

Vorteilhaft ist also, dass zwei oder mehr Personen gleichzeitig am gleichen NURBS-Objekt arbeiten können, da das notwendige Neu-Berechnen des Meshs nach Veränderung bzw. eines der Kontrollpunkte hinreichend schnell erfolgt. Insbesondere ist es möglich, dass die CAD-Daten von zwei Rechnern gleichzeitig bearbeitet werden, die über eine nicht echtzeitfähige Datenverbindung und/oder eine Datenverbindung mit vergleichsweise kleiner Datenübertragungskapazität verbunden sind. Beispielsweise ist es möglich, dass eine Person, die an den CAD-Daten arbeitet, sich in Deutschland befindet und die andere in Brasilien. Es ist nämlich nur notwendig, die Veränderung beispielsweise der Kontrollpunkte über die Datenleitung zu übertragen, da die ständige Neu-Berechnung des Meshs und/oder der Kurvenpunkte auf jedem der benutzten Rechner simultan erfolgt.

Vorteilhaft ist zudem, dass die Bearbeitung der CAD-Daten nach Anzahl an Personen skalierbar erfolgen kann. Je mehr Personen an einem Modell arbeiten, das mit CAD-Daten beschrieben wird, desto größer muss potentiell die Rechenleistung sein. Die Rechenleistung kann aber einfach durch das Hinzunehmen weiterer Grafikprozessoren gesteigert werden.

Wenn ein NURBS-Objekt affin transformiert wird, also translatiert, rotiert, gestreckt, gestaucht oder geschert, so ergibt sich das gleiche Ergebnis, egal ob zunächst die Kontrollpunkte affin transformiert werden und danach aus den Kontrollpunkten das Mesh errechnet wird, oder ob jeder Punkt des Meshs affin transformiert wird.

Wenn auf Rechnern an unterschiedlichen Orten gearbeitet wird, muss also entweder bei jeder affinen Transformation das gesamte Mesh übertragen werden oder aber es muss an jedem der Rechner das Mesh neu berechnet werden. Dadurch, dass die Berechnung des Meshs mittels des erfindungsgemäßen Verfahrens parallelisiert und damit signifikant beschleunigt werden kann, ist es ausreichend, die veränderten Kontrollpunkte zwischen den Rechnern auszutauschen. Damit ist eine Zusammenarbeit von Personen an dem gleichen CAD-Objekt möglich, auch wenn zwischen den verwendeten Rechnern nur eine Verbindung mit geringer Datenübertragungskapazität existiert. Beispielsweise kann die Datenübertragungskapazität kleiner als 1 Mbit pro Sekunde sein.

Im Folgenden werden die mathematischen Grundlagen der Erfindung erläutert.

## NURBS-Kurven

Eine ungewichtete NURBS-Kurve K ist charakterisiert durch einen Parametersatz, der
- einen Satz Kontrollpunkte $b_i$ mit $i = 0, 1, ..., n$,
- einen Polynomgrad d,
- Gewichte $w_i$ mit $i = 0, 1, ..., n$, wobei $w_i = 1$ gilt,
- ein Kurvenparameterwert-Intervall $I_t = [t_A, t_E]$ eines Kurvenparameterwerts $t_\tau$ und
- einen Trägervektor $T = \{t_{r=0} = t_A, ..., t_{r=R} = t_E\}$ mit $t_{r'} \leq t_{r'+1}$ für alle r' aufweist, und ist rekursiv definiert als

$$\overrightarrow{b_\lambda^\gamma} = \begin{cases} \overrightarrow{b_\lambda^0} = b_{i=\lambda} & , wenn\ j = 0 \\ \left(1 - \alpha_\lambda^\gamma(t)\right)b_{\lambda-1}^{\gamma-1} + \alpha_\lambda^\gamma(t)b_\lambda^{\gamma-1} & sonst \end{cases} \tag{1}$$

mit

$$\alpha_\lambda^\gamma = \frac{t - t_\lambda}{t_{\lambda+d-\gamma+1} - t_\lambda} \tag{2}$$

wobei

$$\gamma = 0, \dots, d \tag{3}$$

$$\lambda = r - d, \dots, r\ \text{mit} \tag{4}$$

$$t \in [t_{r=r'}, \dots, t_{r=r'+1}[ \tag{5}$$

und wobei $b_{i=\lambda}$ der (i+1)-te Kontrollpunkte ist. Die Kontrollpunkte $b_i$ könnten auch mit Vektorpfeil geschrieben werden, wird aber der Übersichtlichkeit halber weggelassen.

Die Definition gilt im ungewichteten Fall. In den Formeln ist

$\gamma$ der Grad des Splines und zugleich die Iterationsebenen-Nummer,
$\lambda$ ein Zählindex, der für den Fall $\gamma = 0$ dem Zählindex der Kontrollpunkte entspricht, und
r der Index der Einträge des Trägervektors T = {$t_{r=0} = t_A, \dots, t_{r=R} = t_E$}.

Der Trägervektor T hat meist R+1 = (n + 1) + d +1 Komponenten. Es ist jedoch auch möglich, dass der T hat R+1 = (n + 1) + d -1 Komponenten hat, wenn der erste und der letzte Eintrag des Trägervektors T weggelassen werden oder mehr Komponenten hat.

Eine gewichtete NURBS-Kurve K ist rekursiv definiert als

$$w_\lambda^\gamma \overrightarrow{b_\lambda^\gamma} = \begin{cases} w_\lambda \overrightarrow{b_\lambda} = \overrightarrow{b_\lambda^{\gamma=0}} & , wenn\ \gamma = 0 \\ \left(1 - \alpha_\lambda^\gamma(t)\right) w_{\lambda-1}^{\gamma-1}(t)\, b_{\lambda-1}^{\gamma-1} + \alpha_\lambda^\gamma(t)\, w_\lambda^{\gamma-1}(t)\, b_\lambda^{\gamma-1} & sonst \end{cases} \tag{6}$$

mit

$$\alpha_\lambda^\gamma = \frac{t - t_\lambda}{t_{\lambda+d-\gamma+1} - t_\lambda} \tag{7}$$

und

$$w_\lambda^\gamma = \left(1 - \alpha_\lambda^\gamma(t)\right)b_{\lambda-1}^{\gamma-1} + \alpha_\lambda^\gamma(t)b_\lambda^{\gamma-1} \tag{8}$$

**4**

Für die Gewichte $w_i$ gilt $w_i \neq 0$

$$\lambda = r' - d, \ldots, r' \text{ mit } t \in [t_{r=r'}, \ldots, t_{r=r'+1}[ \qquad\qquad (9)$$

Wenn eine NURBS-Kurve dargestellt werden soll, müssen Punkte errechnet werden, die auf der NURBS-Kurve liegen. Dazu wird eine Menge $\mathcal{J} = \{t_{\tau=0}=t_A, \ldots, t_{\tau max}= t_E\}$ an Kurvenparameterwerten $t_\tau$ gewählt, für die der jeweilig zugehörige Kurven-Punkt $P(t_\tau)$ berechnet wird.

Es sei darauf hingewiesen, dass aus $t\tau max = t_E$ nicht gefolgert werden kann, dass $\tau_{max}= E$ gilt. Der Index E weist lediglich darauf hin, dass $t_E$ das letzte und damit größte Element der Menge $\mathcal{J}$ ist.

Es sei zudem darauf hingewiesen, dass die Kurvenparameterwerte t auf zwei verschiedene Weisen durchnummeriert werden: Die Elemente der Menge $\mathcal{J}$ an Kurvenparameterwerten sind mit dem Index $\tau$ nummeriert. Die Elemente des Trägervektors T sind mit dem Index r nummeriert. Um Verwechslungen zu vermeiden, wird in der Regel der jeweilige Index mit angegeben, er könnte aber auch weggelassen werden.

Die Menge $\mathcal{J}$ an Kurvenparameterwerten enthält meist äquidistante Kurvenparameterwerte $t_\tau$, das heißt, dass die Differenz zweier benachbarter Kurvenparameterwerte $t_\tau$ stets gleich ist. Es ist aber auch möglich, nicht-äquidistant verteilte Kurvenparameterwerte $t_\tau$ zu wählen. Beispielsweise können die Kurvenparameterwerte so gewählt sein, dass der Abstand zwischen zwei benachbarten $t_\tau$ von einem Sehnenfehler der Mesh-Punkte oder Kurven-Punkte abhängt. Beispielsweise kann dann eine NURBS-Kurve mit kollinearen Kontrollpunkten aus nur zwei Kurvenpunkten dargestellt werden.

Der Parametersatz charakterisiert die NURBS-Kurve eindeutig, das heißt, dass zu jedem Parametersatz nur genau eine NURBS-Kurve existiert. Der Parametersatz charakterisiert die NURBS-Kurve aber nicht eineindeutig, das heißt, dass eine NURBS-Kurve durch - in der Regel unendlich viele - Parametersätze beschreibbar ist. Das erfindungsgemäße Verfahren ist von der Wahl des Parametersatzes unabhängig.

Insbesondere existiert für jede NURBS-Kurve ein Parametersatz, in dem das Kurvenparameterwert-Intervall $I_t = [t_A, t_E]$ das Einheitsintervall ist, also $I_t = [0, 1]$. Zur Unterscheidung von etwaig vorhandenen mehrere NURBS-Kurven $K_\kappa$ dient der Zählindex $\kappa$.

**NURBS-Flächen**

NURBS-Flächen sind durch einen Parametersatz definierbar, der

- einen Satz Kontrollpunkte $b_{i,j}$ mit i = 0, 1, ..., n und j = 0, 1, ..., m,
- einen ersten Polynomgrad $d_1$,
- einen zweiten Polynomgrad $d_2$,
- Gewichte $w_{i,j}$ für jeden Kontrollpunkt $b_{i,j}$,
- ein u-Kurvenparameterwert-Intervall $I_u = [u_A, ..., u_E]$ eines u-Kurvenparameterwerts u,
- ein v-Kurvenparameterwert-Intervall $I_v = [v_A, ..., v_E]$ eines v-Kurvenparameterwerts v,
- einen u-Trägervektor $T_u = \{u_{p=0}, ..., u_{p=P} = u_E\}$ mit $t_{p'} \leq t_{p'+1}$ für alle p' und
- einen v-Trägervektor $T_v = \{v_{q=0}, ..., v_{q=Q} = v_E\}$ mit $t_{q'} \leq t_{q'+1}$ für alle q' enthält.

Es sei darauf hingewiesen, dass auch für Flächen der Parametersatz für die NURBS-Fläche eindeutig, nicht aber eineindeutig ist. Insbesondere können die Bezeichnungen u-Kurvenparameterwert und v-Kurvenparameterwert vertauscht werden, wenn die Berechnungen entsprechend angepasst werden.

Das Mesh M der NURBS-Fläche F ist eine Menge von Punkten der NURBS-Fläche F, die zu vorgegebenen Stützstellen des zweidimensionalen Intervalls $I_v$ x $I_u$ gehören. Bevorzugt ist das Mesh die Menge aller Punkte der NURBS-Fläche F, die zu den Stützstellen des zweidimensionalen Intervalls $I_v$ x $I_u = [v_A, ..., v_E]$ x $[u_A, ..., u_E]$ gehört. Das Kreuz symbolisiert das kartesische Produkt.

Der Mesh-Punkt $S(u_p, v_q)$ zum u-Kurvenparameterwert-Paar $(u_p, v_q)$ wird berechnet, indem zunächst für den u-Kurvenparameterwert $u_p$ anhand der Kontrollpunkte $b_{0,j}$ zugehörige Zwischenpunkte $Z_0(u_p)$ berechnet werden. In anderen Worten werden die m+1 Kontrollpunkte $b_{0,0}$, $b_{0,1}, ..., b_{0,m}$ als die Kontrollpunkte einer NURBS-Kurve betrachtet und für den Kurvenparameterwert $t=u_p$ der zugehörige Kurven-Punkt berechnet. Die m + 1 Kontrollpunkte $b_{0,0}$, $b_{0,1}, ..., b_{0,m}$ können als eine erste Kontrollpunkt-Gruppe $G_0 = \{b_{i=0,0}, b_{0,1}, ..., b_{0,m}\}$ betrachtet werden.

Zudem werden für den gleichen u-Kurvenparameterwert $u_p$ anhand der Kontrollpunkte $b_{1,j}$ einer zweiten Gruppe $G_1=\{b_{i=1,0}, b_{1,1},..., b_{1,m}\}$ die zugehörigen Zwischenpunkte $Z_1(u_p)$ berechnet. Allgemein werden für den gleichen u-Kurvenparameterwert $u_p$ anhand der Kontrollpunkte $b_{i,j}$ einer (i+1)-ten Gruppe $G_i=\{b_{i,0}, b_{i,1},..., b_{i,m}\}$ die jeweilig zugehörigen Zwischenpunkte $Z_i(u_p)$ berechnet. So werden n+1 Zwischenpunkte $Z_i(u_p)$ erhalten.

Nachfolgend werden diese Zwischenpunkte $Z_i(u_p)$ als Kontrollpunkte einer NURBS-Kurve betrachtet und für den Kurvenparameterwert $t=v_q$ der zugehörige Kurven-Punkt $S(u_p,v_q)$ berechnet, der als Mesh-Punkt bezeichnet wird.

## Rekursive Berechnung

Aus der Definition (8) folgt beispielsweise für $\gamma = 2$, $d = 2$, $r = 2$ und damit $\lambda = 2$, dass für die Berechnung von $\overrightarrow{b_2^2}$ zunächst die Berechnungsroutine für $\overrightarrow{b_2^1}$ und $\overrightarrow{b_1^1}$ aufgerufen wird. Diese ruft ihrerseits die Berechnungsroutine für $\overrightarrow{b_2^0}, \overrightarrow{b_1^0}$ und $\overrightarrow{b_0^0}$ auf, welche als Ergebnis die Kontrollpunkte $b_2$, $b_1$ und $b_0$ liefert und die Rekursion ist am Endpunkt.

## Iterative Berechnung

Die iterative Berechnung startet mit den Kontrollpunkten $b_i$ und einem vorgegebenen Kurvenparameterwert $t_\tau$, zu dem der zugehörige Kurven-Punkt $P(t_\tau)$ auf der NURBS-Kurve berechnet werden soll. Der Übersichtlichkeit halber wird im Folgenden der Zählindex $\tau$ beim Kurvenparameterwert $t_\tau$ weggelassen.

Aus zwei Kontrollpunkten, deren Zählindices sich um genau 1 unterscheiden, wird der Kontrollpunkt mit dem kleineren Zählindex mit (1-a) multipliziert (vergleiche Formel (7)). Der Kontrollpunkt mit dem größeren Zählindex wird mit a multipliziert.

Aus Formel (6) folgt (durch Umbenennen von $\lambda$ -1 in $\lambda$ und $\gamma$ -1 in $\gamma$ (für $\gamma$ -1 $\neq$ 0))

$$\left(1 - \alpha_{\lambda+1}^{\gamma+1}(t)\right) w_\lambda^\gamma(t)b_\lambda^\gamma + \alpha_{\lambda+1}^{\gamma+1}(t)\, w_{\lambda+1}^\gamma(t)\, b_{\lambda+1}^\gamma = w_{\lambda+1}^{\gamma+1}\overrightarrow{b_{\lambda+1}^{\gamma+1}} \qquad (10)$$

Für die Kontrollpunkte $b_0 = b_{\lambda=0}^{\gamma=0}$ und $b_1 = b_{\lambda=1}^{\gamma=0}$ folgt daraus

$$\left(1 - \alpha_{\lambda+1}^{\gamma+1}(t)\right) w_\lambda^\gamma(t)b_\lambda^\gamma + \alpha_{\lambda+1}^{\gamma+1}(t)\, w_{\lambda+1}^\gamma(t)\, b_{\lambda+1}^\gamma =$$
$$(1 - \alpha_1^1(t))\, w_0^0(t)b_0^0 + \alpha_1^1(t)\, w_1^1(t)\, b_1^\gamma = w_1^1\overrightarrow{b_1^1} \qquad (11)$$

Aus den Kontrollpunkten $b_i$ mit $i = 0, 1, ..., n$ werden so deBoor-Punkte $b_\lambda^1$ berechnet. Die Zahl der deBoor-Punkte $b_\lambda^1$ ist dabei um 1 kleiner als die Zahl der Kontrollpunkte.

Allgemein gilt für die Kontrollpunkte $b_{i'} = b_{\lambda=i'}^{\gamma=0}$ und $b_{i'+1} = b_{\lambda=i'+1}^{\gamma=0}$

$$\left(1 - \alpha_{\lambda+1}^{\gamma+1}(t)\right) w_\lambda^\gamma(t)b_\lambda^\gamma + \alpha_{\lambda+1}^{\gamma+1}(t)\, w_{\lambda+1}^\gamma(t)\, b_{\lambda+1}^\gamma =$$
$$(1 - \alpha_{i'+1}^1(t))\, w_{i'}^0(t)b_{i'}^0 + \alpha_{i'+1}^1(t)\, w_{i'+1}^1(t)\, b_{i'+1}^\gamma = w_{i'+1}^1\overrightarrow{b_{i'+1}^1} \qquad (12)$$

Alle deBoor-Punkte $b_\lambda^\gamma$, die den gleichen Wert für $\gamma$ haben, werden als zu einer Iterationsebenen $E_\gamma$ gehörig

betrachtet. Die Zahl der deBoor-Punkte $b_\lambda^\gamma$ in einer Iterations-ebene $E_\gamma$ nimmt um 1 ab, wenn $\gamma$ um 1 zunimmt.

Die Berechnung nach Formel (12) wird so lange wiederholt, bis die Iterationsebene $E_\gamma$ nur noch einen Wert enthält. Das ist der deBoor-Punkt $b_{r'}^d$, für den Kurvenparameterwert $t_\tau$.

Diese Berechnung wird für alle Kurvenparameterwerte $t_\tau$ des Kurvenparameterwert-Intervalls $I_t = [t_A, t_E]$ wiederholt. Dadurch wird eine Kurvenpunktmenge (

$$\mathcal{K} = \{\, P(t_A), \ldots,$$

$P(t_E)\})$ erhalten, die auf einem Ausgabegerät, insbesondere einem VR-Ausgabegerät dargestellt wird.

Gemäß einer bevorzugten Ausführungsform umfasst das Berechnen der Kurven-Punkte $P(t_\tau)$ der NURBS-Kurve K aus Kurvenparameterwerten $t_\tau$, die folgendeN Schritte: (a) Erfassen eines Kurvenparameterwerts $t_\tau$, insbesondere dadurch, dass dieser Kurvenparameterwerts $t_\tau$ als Teil des Kurvenparameterwert-Intervalls $I_t$ vorgegeben wird, (b) aus den Kontrollpunkten $b_i$ und dem Kurvenparameterwert $t_\tau$ iterativ v Berechnen von deBoor-Punkten $b_\lambda^\gamma$ aufsteigender Iterationsebenen $E_\gamma$, wobei die Zahl der deBoor-Punkte $b_\lambda^\gamma$ mit aufsteigender Iterationsebene abnimmt, bis die jeweilige Iterationsebene $E_{\gamma=d}$ nur noch einen deBoor-Punkt $b_{\lambda=r'}^{\gamma=d}$ enthält, wobei $\gamma = 0, \ldots, d$ ein Iterationsebenen-Nummerierungsindex ist und wobei $\lambda = r' - d + \gamma, \ldots, r'$ gilt, wobei r' der Index desjenigen Elements des Trägervektors T ist, für das gilt $t_\tau \in [t_{r=r'}, t_{r=r'+1}]$, (c) aus den Kontrollpunkten $b_i$, den deBoor-Punkten $b_\lambda^\gamma$ und dem Kurvenparameterwert $t_\tau$ Berechnen des Kurven-Punkts $P(t_\tau)$ und (d) Wiederholen der Schritte 0 bis 0 für weitere Kurvenparameterwerte $t_\tau \in I_t$ sodass eine Kurvenpunktmenge (

$$\mathcal{K} = \{\, P(t_A), \ldots,$$

$P(t_E)\})$ erhalten wird.

Insbesondere umfasst das Verfahren bevorzugt die Schritte (i) Berechnen von n deBoor-Punkten $b_\lambda^{\gamma=1}$ einer ersten Iterations-Ebene $E_{\gamma=1}$ aus den Kontrollpunkten $b_i$ und Speichern dieser deBoor-Punkte $b_\lambda^{\gamma=1}$, (ii) Berechnen von deBoor-Punkten $b_\lambda^{\gamma=2}$ einer nachfolgenden Iterations-Ebene $E_{\gamma=2}$ aus den Kontrollpunkten $b_\lambda^{\gamma=1}$ der vorhergehenden Iterations-Ebene $E_1$ und Speichern der so erhaltenen deBoor-Punkte $b_\lambda^{\gamma=2}$ der nachfolgenden Iterations-Ebene $E_2$, (iii) Wiederholen von Schritt 0 bis die Iterations-Ebene $E_d$ nur einen deBoor-Punkt $b_{\lambda=r'}^{\gamma=d}$ enthält und (iv) Ausgeben dieses deBoor-Punkts als Kurven-Punkt $P(t_\tau)$ zum vorgegebenen Kurvenparameterwert $t_\tau$.

Der genannte Schritt 0, nämlich das Berechnen der deBoor-Punkte der nachfolgenden Iterations-Ebene aus den Kontrollpunkten $b_i = b_{\lambda=i}^{\gamma=0}$ oder den deBoor-Punkten $b_\lambda^\gamma$ der vorhergehenden Iterations-Ebene $E_1$ umfasst vorzugsweise die folgenden Schritte: (i) Multiplizieren des deBoor-Punkts $b_\lambda^\gamma$ mit $\dfrac{t - t_{r=\lambda}}{t_{r=\lambda+d-\gamma+1} - t_{r=\lambda}}$, sodass ein erstes Produkt erhalten wird, (ii) Multiplizieren des deBoor-Punkts $b_{\lambda-1}^\gamma$ mit $\left(1 - \dfrac{t - t_{r=\lambda}}{t_{r=\lambda+d-\gamma+1} - t_{r=\lambda}}\right)$, sodass ein zweites Produkt erhalten wird, (iii) Addieren der Produkte, sodass der deBoor-Punkt $b_\lambda^{\gamma+1}$ erhalten wird, und (iv) Wiederholen dieser Schritte für alle deBoor-Punkte der vorhergehenden Iterations-Ebene.

Gemäß einer bevorzugten Ausführungsform wird das Berechnen der Kurven-Punkte $P(t_\tau)$ und/oder der Zwischen-Punkte $Z$ für eine Mehrzahl von NURBS-Objekten ($K_\kappa$, F) zumindest auch parallelisiert auf Grafikprozessoren durchgeführt wird.

Unter einem Grafikprozessor wird ein Prozessor verstanden, der aufgrund seiner Bauart nicht in der Lage ist, eine rekursive Berechnung durchzuführen.

Es ist möglich, nicht aber notwendig, dass alle Berechnungen von Kurven-Punkten und/oder von Zwischenpunkten $Z$ ein NURBS-Objekt in Form einer Fläche auf Grafikprozessoren durchgeführt werden. Maßgeblich ist lediglich, dass zumindest zwei Berechnungen gleichzeitig auf zwei getrennten Grafikprozessoren durchgeführt werden, die zu zwei unterschiedlichen NURBS-Objekten gehören.

Vorzugsweise wird das Berechnen der Kurven-Punkte und/oder der Zwischen-Punkte auf einer Recheneinheit durchgeführt, die eine Vielzahl an Kernen aufweisen, vorzugsweise zumindest 50, insbesondere 1000 Kerne. Die Zahl der Kerne ist nach oben nicht grundsätzlich beschränkt, günstig ist es aber, wenn die Zahl der Kerne kleiner ist als 100 000, um den Aufwand für die Hardware in Grenzen zu halten.

Unter dem Merkmal, dass das Berechnen, wie gemäß einer bevorzugten Ausführungsform vorgesehen, parallelisiert verläuft, wird insbesondere verstanden, dass eine Mehrzahl an Berechnungen zu unterschiedlichen NURBS-Objekten gleichzeitig auf zumindest einem Grafikprozessor berechnet wird. Es sei darauf hingewiesen, dass unter dem Grafikprozessor eine eigenständige Recheneinheit verstanden wird. Es ist daher möglich, dass die Grafikprozessoren Teil eines übergeordneten Gesamt-Prozessors sind. In diesem Fall können die Grafikprozessoren auch als Kerne eines übergeordneten Prozessors bezeichnet werden.

Vorzugsweise umfasst das Verfahren die Schritte: (a) Erfassen eines Markierens eines Kontrollpunkts $b_{i,j}$ eines ausgewählten NURBS-Objekts (K, F) mittels eines ersten Lokalrechners, (b) Senden des Sperrbefehls an zumindest einen zweiten Lokalrechner, (c) Erfassen einer Veränderung des Kontrollpunkts $b_{i,j}$, sodass ein neuer Kontrollpunkt $b_{i,j}$' erhalten wird, mittels des ersten Lokalrechners, (d) Senden des veränderten Kontrollpunkts $b_{i,j}$ an den zweiten Lokalrechner und (e) Berechnen von Kurven-Punkten $P(t_\tau)$ und/oder des Meshs des NURBS-Objekts (K, F) gemäß einem oben beschriebenen Verfahren auf dem zweiten Lokalrechner.

Vorzugsweise existieren mehr als zwei Lokalrechner. Die Lokalrechner sind vorzugweise mittels einer nicht-echtzeitfähigen Datenverbindung verbunden. In diesem Fall ist die Erfindung besonders vorteilhaft, da nur wenige Daten übertragen werden müssen. Unter einer echtzeitfähigen Datenverbindung wird eine Verbindung verstanden, die so aufgebaut ist, dass eine Antwort innerhalb einer vorherbestimmten Zeitspanne, nämlich der Reaktionszeit, sicher erhalten wird. Eine derartige Datenverbindung ist insbesondere zum Übertragen der Daten gemäß DIN 44300 ausgebildet. Vorzugsweise beträgt die Reaktionszeit höchstens 50 Millisekunden. Unter einer nicht-echtzeitfähigen Datenverbindung wird eine Datenverbindung verstanden, für die diese Eigenschaft nicht über einen Zeitraum von zumindest 10 Minuten garantiert werden kann.

Alternativ oder zusätzlich sind die beiden Lokalrechner mittels einer Datenverbindung verbunden, die eine garantierte Datenrate besitzt, die unterhalb von 10 Megabit pro Sekunde liegt. Hierunter wird verstanden, dass diese Datenrate nicht über einen Zeitraum von beispielsweise 10 Minuten garantiert ist. Zum Durchführen des erfindungsgemäßen Verfahrens reicht eine Datenrate von zumindest 100 Kilobyte pro Sekunde aus, wenn zwei Lokalrechner beteiligt sind. Die Datenrate beträgt folglich vorzugsweise zumindest 100 Kilobyte pro Sekunde. Sind n (n > 2) Lokalrechner beteiligt, so beträgt die Datenrate vorzugsweise zumindest (n-1)*100 Kilobyte pro Sekunde.

Unter einem Sperrbefehl wird insbesondere ein Befehl verstanden, der kodiert, sodass der entsprechende Kontrollpunkt nicht mehr markiert werden kann. Auf diese Weise ist sichergestellt, dass ein markierter Kontrollpunkt nur noch von demjenigen Benutzer verändert werden kann, der ihn markiert hat.

Das Senden des Sperrbefehls umfasst vorzugsweise das Senden eines Identifikationswerts, der den Kontrollpunkt eindeutig kennzeichnet. In anderen Worten ist es günstig, wenn in jedem Kontrollpunkt genau ein Identifikationswert zugewiesen ist, sodass jeder Kontrollpunkt eindeutig, vorzugsweise eineindeutig, mittels des Identifikationswerts identifizierbar ist.

Vorzugsweise umfasst das Verfahren zudem den Schritt eines Überwachens, ob der Kontrollpunkt weiterhin markiert ist und gegebenenfalls eines Erfassens, wenn der Kontrollpunkt nicht mehr markiert ist. Ist der Kontrollpunkt nicht mehr markiert, wird ein Entsperrbefehl an einen Lokalrechner gesendet. Das bedeutet, dass der entsprechende Kontrollpunkt erneut markiert werden kann, beispielsweise von einem Benutzer, der auf einem anderen Lokalrechner arbeitet.

Vorzugsweise umfasst das Markieren des Kontrollpunkts die folgenden Schritte:

(a) Erfassen einer Eingabegerät-Position eines Eingabegeräts (relativ zum Koordinatensystem), (b) Darstellen eines virtuellen Werkzeugs relativ zur NURBS-Fläche, (c) Berechnen eines Abstands des virtuellen Werkzeugs von einem Kontrollpunkt $b_i$ einer NURBS-Kurve ($K_\kappa$), (d) Erfassen eines Markierbefehls vom Eingabegerät und Markieren des Kontrollpunkts $b_i$, der den kleinsten Abstand hat, und (e) Ermitteln eines Identifikationswerts der zugehörigen NURBS-Kurve ($K_\kappa$).

Unter einem Eingabegerät wird eine Vorrichtung verstanden, mittels der ein Benutzer ein virtuelles Werkzeug im virtuellen Raum bewegen und bedienen kann. Vorzugsweise umfasst das Eingabegerät eine Positionsbestimmungsvorrichtung zum Bestimmen einer Position des Eingabegerätes relativ zu einem vorgegebenen Koordinatensystem. Dazu kann das Eingabegerät beispielsweise Beschleunigungssensoren und/oder eine Triangulationseinheit zur Bestimmung ihrer Position aus Triangulationsmessung umfassen. Das Erfassen der Position des Eingabegeräts gehört zum Stand der Technik und wird daher nicht näher erläutert.

Vorzugsweise umfasst das Verfahren die Schritte: (a) Erfassen eines Erstell-Befehls für ein neues NURBS-Objekts (K, F) mittels eines ersten Lokalrechners, (b) Zuweisen einer Kennung zu jedem Kontrollpunkt, (c) Senden des Parametersatzes und der Kennungen an zumindest einen zweiten Lokalrechner und (d) Berechnen von Kurven-Punkten $P(t_\tau)$ und/oder des neuen NURBS-Objekts (K, F) gemäß einem oben beschriebenen Verfahren auf dem zweiten Lokalrechner.

Vorzugsweise umfasst das Senden des Sperrbefehls an den zumindest einen zweiten Lokalrechner ein Senden des Sperrbefehls an einen Zentralrechner oder ein Senden des Sperrbefehls an den zumindest einen zweiten Lokalrechner mittels des Zentralrechners. Ein Lokalrechner ist dann besonders vorteilhaft, wenn mehr als zwei Lokalrechner vorhanden sind. In diesem Fall muss jeder Lokalrechner lediglich mit dem Zentralrechner verbunden sein. Alternativ ist es möglich, dass die Lokalrechner alle untereinander verbunden sind und das die Befehle, insbesondere die Erstell-Befehle und die Markierbefehle von jedem Lokalrechner zu jeweils allen anderen Lokalrechnern übertragen werden. Wird ein Kontrollpunkt verändert, so werden die Koordinaten des neuen Kontrollpunkts ebenfalls an einen Lokalrechner gesendet. Diese berechnen die Kurven-Punkte und/oder das Mesh desjenigen Objekts, das mittels des entsprechenden Kontrollpunkts beschrieben wurde, neu.

Vorzugsweise umfasst das Verfahren die Schritte : (A) Erfassen einer Personen-Blickrichtung $\vec{A}$ und einer Augen-Position $\vec{P}$ einer Person relativ zu einem vorgegebenen Koordinatensystem, (B) Berechnen eines Linksaugen-Bilds aus der Personen-Blickrichtung $\vec{A}$, der Personen-Position $\vec{P}$ und dem Mesh und/oder den Kurven-Punkten $P(t_\tau)$, (C) Berechnen eines Rechtsaugen-Bilds aus der Personen-Blickrichtung, der Personen-Position und dem Mesh und/oder den Kurven-Punkten $P(t_\tau)$ und (D) Darstellen des Linksaugen-Bilds und des Rechtsaugen-Bilds mittels eines 3D-Darstellungsgeräts. Das Darstellen mittels des 3D-Darstellungsgeräts ist insbesondere ein Darstellen auf einem VR-Ausgabegerät. In anderen Worten wird einem Benutzer das NURBS-Objekt in einer dreidimensionalen virtuellen Umgebung dargestellt.

Da das Verfahren vorzugweise auf zwei Lokalrechnern für zumindest zwei Benutzer so durchgeführt wird, dass diese das NURBS-Objekt in einem dreidimensionalen virtuellen Raum sehen können, umfasst das Verfahren bevorzugt die Schritte: (A) Erfassen einer ersten Personen-Blickrichtung $\overrightarrow{A1}$ und einer ersten Augen-Position $\overrightarrow{P1}$ einer ersten Person relativ zu einem vorgegebenen Koordinatensystem mittels des ersten Lokalrechners, (B) Berechnen eines ersten Linksaugen-Bilds aus der ersten Personen-Blickrichtung $\overrightarrow{A1}$, der ersten Personen-Position $\vec{P}$ und dem Mesh und/oder den Kurven-Punkten $P(t_\tau)$ mittels des ersten Lokalrechners, (C) Berechnen eines ersten Rechtsaugen-Bilds aus der ersten Personen-Blickrichtung $\overrightarrow{A1}$, der ersten Personen- Position $\overrightarrow{P1}$ und dem Mesh und/oder den Kurven-Punkten $P(t_\tau)$ und (D) Darstellen des ersten Linksaugen-Bilds und des ersten Rechtsaugen-Bilds mittels eines ersten 3D-Darstellungsgeräts, das mit dem ersten Lokalrechner verbunden ist, (E) Erfassen einer zweiten Personen-Blickrichtung $\overrightarrow{A2}$ und einer zweiten Augen-Position $\overrightarrow{P2}$ einer zweiten Person relativ zu einem vorgegebenen Koordinatensystem mittels des zweiten Lokalrechners, (F) Berechnen eines zweiten Linksaugen-Bilds aus der zweiten Personen-Blickrichtung $\overrightarrow{A2}$, der zweiten Personen-Position $\overrightarrow{P2}$ und dem Mesh und/oder den Kurven-Punkten $P(t_\tau)$ mittels des zweiten Lokalrechners, (G) Berechnen eines zweiten Rechtsaugen-Bilds aus der zweiten Personen-Blickrichtung $\overrightarrow{A2}$, der zweiten Personen- Position $\overrightarrow{P2}$ und dem Mesh und/oder den Kurven-Punkten $P(t_\tau)$ und (H) Darstellen des zweiten Linksaugen-Bilds und des zweiten Rechtsaugen-Bilds mittels eines zweiten 3D-Darstellungsgeräts, das mit dem zweiten Lokalrechner verbunden ist.

Erfindungsgemäß ist zudem ein Rechner, der ein VR-Ausgabegerät aufweist und eingerichtet ist zum automatischen Durchführen eines erfindungsgemäßen Verfahrens. Ebenfalls erfindungsgemäß ist ein Rechner-Netzwerk, das einen ersten Lokalrechner und zumindest einen zweiten Lokalrechner aufweist, wobei die Lokalrechner eingerichtet sind zum automatischen Durchführen eines erfindungsgemäßen Verfahrens.

Im Folgenden wird die Erfindung anhand der beigefügten Zeichnungen näher erläutert. Dabei zeigt

Figur 1     mit den Teilfiguren 1a, b, und 1c schematisch die Berechnung des Meshs einer NURBS-Fläche F,

Figur 2     eine schematische Darstellung eines erfindungsgemäßen Rechner-Netzwerks zum Durchführen eines erfindungsgemäßen Verfahrens,

Figur 3     ein Flussdiagramm für einen Teil eines erfindungsgemäßen Verfahrens und

Figur 4     ein zweites Flussdiagramm für einen weiteren Teil eines erfindungsgemäßen Verfahrens.

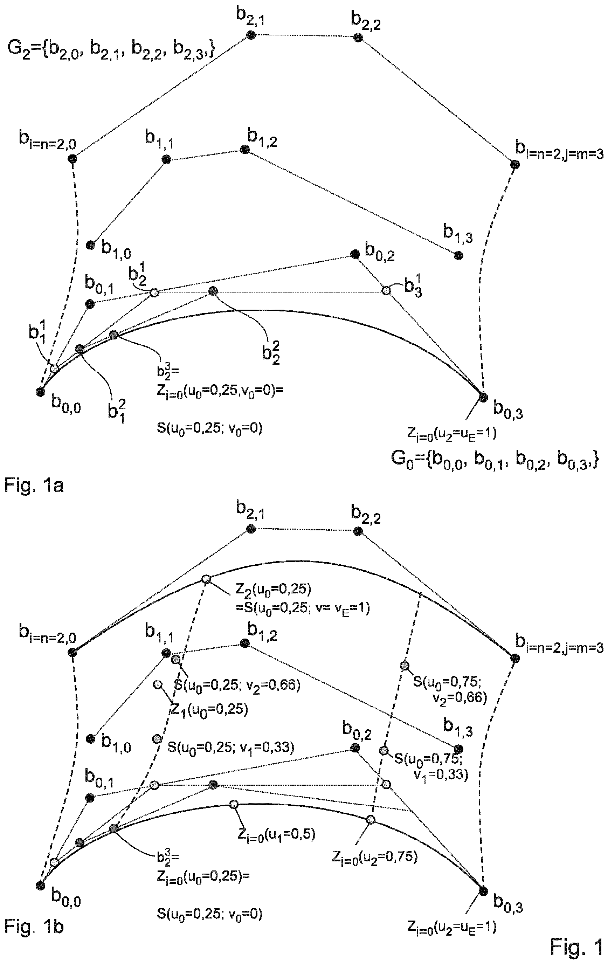

Figur 1 zeigt ein NURBS-Objekt in Form einer NURBS-Fläche F, die durch einen Parametersatz definiert ist. Dieser Parametersatz umfasst einen Satz an Kontrollpunkten b00, b01, ...b33. Der erste Polynomgrad $d_1$ entspricht dem zweiten Polynomgrad $d_2$ und beträgt $d_1 = d_2 = 3$. Zum Berechnen des exemplarisch gewählten Mesh-Punkts S (0,25; 0,66) werden zunächst für die Kontrollpunkte $b_{0,0}$, $b_{0,1}$, $b_{0,2}$ und $b_{0,3}$, die zu einer ersten Gruppe $G_0$ gehören, die deBoor-Punkte $b_1^1$, $b_2^1$ und $b_3^1 b$ berechnet. Das erfolgt anhand von Formel (12). Diese deBoor-Punkte $b_1^1$, $b_2^1$ und $b_3^1 b$ gehören zu einer Iterationsebene $E_1$.

Aus den deBoor-Punkten der Iterationsebene $E_1$ werden die deBoor-Punkte $b_1^2$ und $b_2^2$ berechnet. Das erfolgt ebenfalls anhand von Formel 12. Aus diesen beiden deBoor-Punkten wird schließlich der deBoor-Punkt $b_2^3$ berechnet.

In Figur 1a ist dieser deBoor-Punkt $b_2^3$ eingezeichnet, der einen Zwischenpunkt $Z_0(u)_0 = Z_0(0,25), v_0 = 0$ darstellt. Dieser Punkt ist zudem ein Mesh-Punkt des Meshs, nämlich der Punkt S(0,25;0).

Figur 1b zeigt, dass die oben genannten Schritte für die zweite Kontrollpunkt-Gruppe $D_1$ und die dritte Kontrollpunkt-Gruppe $G_2$ wiederholt wird. Auf diese Weise werden die Zwischenpunkte $Z_0(0), Z_1(0)$ und $Z_2(0)$ erhalten. Die Gesamtheit dieser Zwischenpunkte ergibt eine Zwischenpunkt-Menge

$$Z(u_0) = \{Z_0(u_0), ..., Z_n(u_0)\}$$

für den gegebenen u-Kurvenparameterwert $u_0$. Aus dieser Zwischenpunkt-Menge $Z(u_0)$ und einem gegebenen v-Kurvenparameterwert $v_0$ wird der zugehörige Mesh-Punkt $S(u_0,v_0)$ mittels des oben im Zusammenhang mit Formel (12) beschriebenen Verfahrens berechnet.

Danach wird die oben beschriebene Prozedur für alle u-Kurvenparameterwerte im u-Kurvenparameterwert-Intervall $I_u = [u_A, ..., u_E]$ und alle v-Kurvenparameterwerte im v-Kurvenparameterwert-Intervall $Iv = [v_A, ..., v_E]$ durchgeführt, sodass ein Mesh M(u,v) mit (u,v) $\in I_u$ x $I_v$ erhalten wird.

Dieses Mesh M(u,v) wird beispielsweise an ein weiteres Darstellungsprogramm übergeben, das jeweils drei benachbarte Punkte zu einem Dreieck verbindet und anhand dieses Dreiecks die NURBS-Fläche F auf einem Ausgabegerät ausgibt.

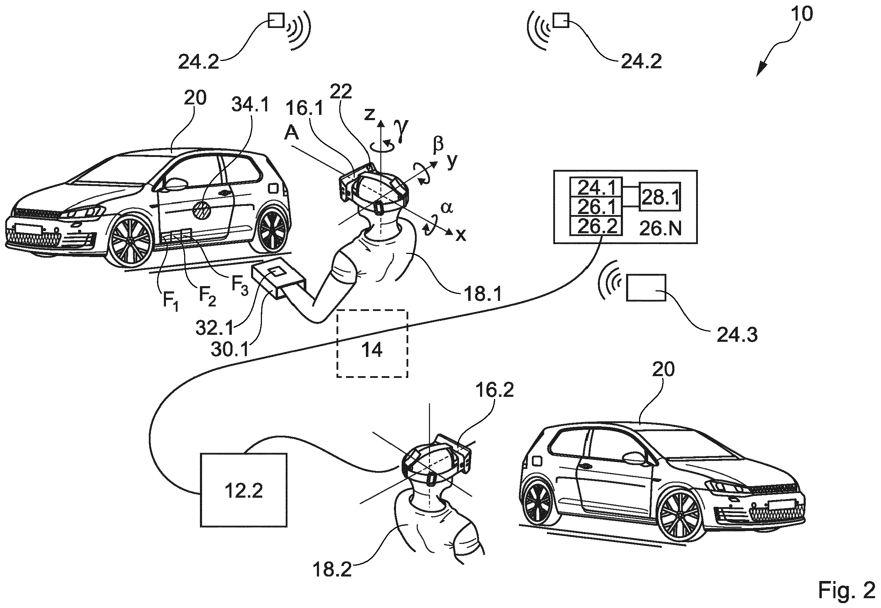

Figur 2 zeigt schematisch ein Rechner-Netzwerk 10, das einen ersten Lokalrechner 12.1 und einen zweiten Lokalrechner 12.2 aufweist. Optional kann das Rechner-Netzwerk einen Zentralrechner 14 aufweisen, das ist aber nicht notwendig. Der erste Lokalrechner umfasst ein erstes VR-Ausgabeberät 16.1 in Form einer VR-Brille. Alternativ kann das VR-Ausgabeberät 16.1 beispielsweise auch eine 3D-Projektion oder ein Hologramm-Ausgabegerät sein.

Im vorliegenden Fall projiziert das VR-Ausgabegerät 16.1 ein Linksaugen-Bild auf ein linkes Auge eines Benutzers 18.1, der das VR-Ausgabegerät 16.1 trägt. Zudem projiziert das VR-Ausgabegerät 16.1 ein Rechtsaugen-Bild auf ein rechtes Auge des Benutzers 18.1. Für den Benutzer 18.1 entsteht damit ein dreidimensionales Bild. Dargestellt wird beispielsweise ein Fahrzeug 20, das durch eine Vielzahl von NURBS-Objekten beschrieben ist.

So umfasst das Fahrzeug 20 beispielsweise eine erste NURBS-Fläche $F_1$, eine zweite NURBS-Fläche $F_2$, .... Diese NURBS-Flächen $F\varphi$ werden dem Benutzer 18.1 dadurch dargestellt, dass eine Personen-Blickrichtung $\vec{A}$ und eine Augen-Position $\vec{P}$ erfasst werden.

Zur Bestimmung der Personen-Blickrichtung $\vec{A}$ besitzt das VR-Ausgabegerät 16.1 eine Sensoreinheit 22 zum Messen eines Rollwinkels $\alpha$, zum Messen eines Nickwinkels $\beta$, der eine Nickbewegung des Benutzers 18 beschreibt, und eines Drehwinkels $\gamma$, der eine Drehung des Kopfes des Benutzers 18 beschreibt. Dazu umfasst das VR-Ausgabegerät 16.1 beispielsweise Beschleunigungssensoren und/oder Drehbeschleunigungssensoren und ist eingerichtet zum automatischen Integrieren der Beschleunigungsdaten, sodass die Position bzw. die Winkellage erhalten wird. Alternativ oder zusätzlich umfasst die Sensoreinheit 22 einen Positionssensor, der eingerichtet ist zum automatischen Bestimmen der

Augen-Position $\vec{P}$ aus Funksignalen von Sendestationen 24.1, 24.2 und 24.3. Insbesondere kann die Sensoreinheit 22 ein sogenanntes Indoor-GPS-System aufweisen, das auf dem Prinzip der Satelliten-Navigation beruht und innerhalb des Raumes aufgebaut ist, in dem sich der Benutzer 18.1 befindet.

Die so gemessene Personen-Blickrichtung $\vec{A}$ und die Augen-Position $\vec{P}$ werden an den Lokalrechner 12.1 gesendet. Der Lokalrechner 12 umfasst eine CPU 24.1, zumindest einen Grafikprozessor 26.1 und einen Digitalspeicher 28.1. Im vorliegenden Fall umfasst der erste Lokalrechner 12.1 3840 Grafikprozessoren 26 in Form von Kernen einer Grafikprozessoreinheit. In anderen Worten kann der Grafikprozessor 26.1 auch als Grafikprozessoreinheit bezeichnet werden, die eine Vielzahl an Kernen aufweist.

Im digitalen Speicher 28.1 sind die Parametersätze der NURBS-Objekte, insbesondere der NURBS-Flächen $F\varphi$ gespeichert. Je nach Personen-Blickrichtung $\vec{A}$ und Augen-Position $\vec{P}$ werden das Linksaugen-Bild und das Rechtsaugen-Bild so berechnet, dass für den Benutzer 18.1 der Eindruck entsteht, das virtuelle Fahrzeug 20 würde sich in seinem Blickfeld befinden.

Der zweite Lokalrechner 12.2 ist so aufgebaut wie der erste Lokalrechner 12.1. Ein zweites VR-Ausgabegerät 16.2, das von einem zweiten Benutzer 18.2 getragen wird, stellt das gleiche Fahrzeug 20 dar.

Der erste Lokalrechner 12.1 umfasst ein Eingabegerät 30.1, das eine Positionssensoreinheit 32 aufweist. Mittels dieser Positionssensoreinheit 32.1 kann ein virtuelles Werkzeug 34.1 positioniert werden. Es ist zudem möglich, mittels Eingabegerät 30.1 einen Markierbefehl abzugeben. In diesem Fall ermittelt der erste Lokalrechner 1.21 die aktuelle Position des virtuellen Werkzeugs 34.1 und den nächstgelegenen Kontrollpunkt eines der NURBS-Objekte. Danach sendet der erste Lokalrechner 12.1 einen Sperrbefehl an den zweiten Lokalrechner 12.2. Das kann mittels des Zentralrechners 14 erfolgen, sofern dieser vorhanden ist. Mittels des Eingabegerätes 30.1 kann zudem ein neues NURBS-Objekt, insbesondere eine neue NURBS-Fläche, erstellt werden.

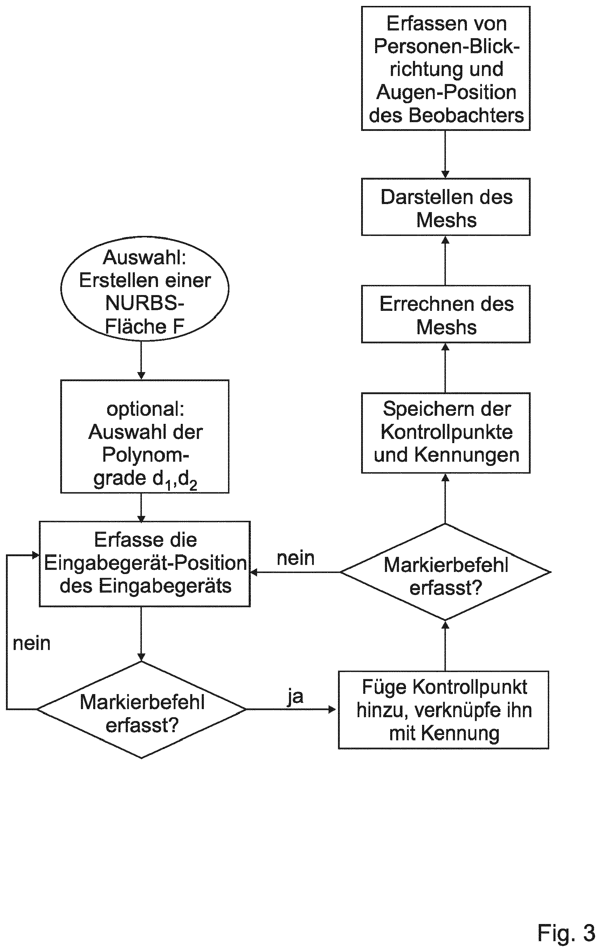

Figur 3 zeigt schematisch den Ablauf des Erstellens einer neuen NURBS-Fläche F. Sofern nicht vorgegeben, wird zunächst der Polynomgrad d ausgewählt. Danach wird die Eingabegerät-Position des Eingabegeräts erfasst und ein Kontrollpunkt zugefügt. Dieser Kontrollpunkt erhält eine automatisch generierte, mit dem Kontrollpunkt eineindeutig verknüpfte Kennung, die auch als Identifikation (kurz ID) bezeichnet werden kann. Die Kontrollpunkte und die Kennungen werden gespeichert und an die jeweils anderen Lokalrechner 12 gesendet. Auf allen Lokalrechnern wird danach das zugehörige Mesh errechnet, sofern die Zahl der Kontrollpunkte bereits ausreichend ist, um dieses Mesh zu berechnen. Dazu werden die Personen-Blickrichtung $\vec{A}$ und die Augen-Position $\vec{P}$ des Beobachters verwendet.

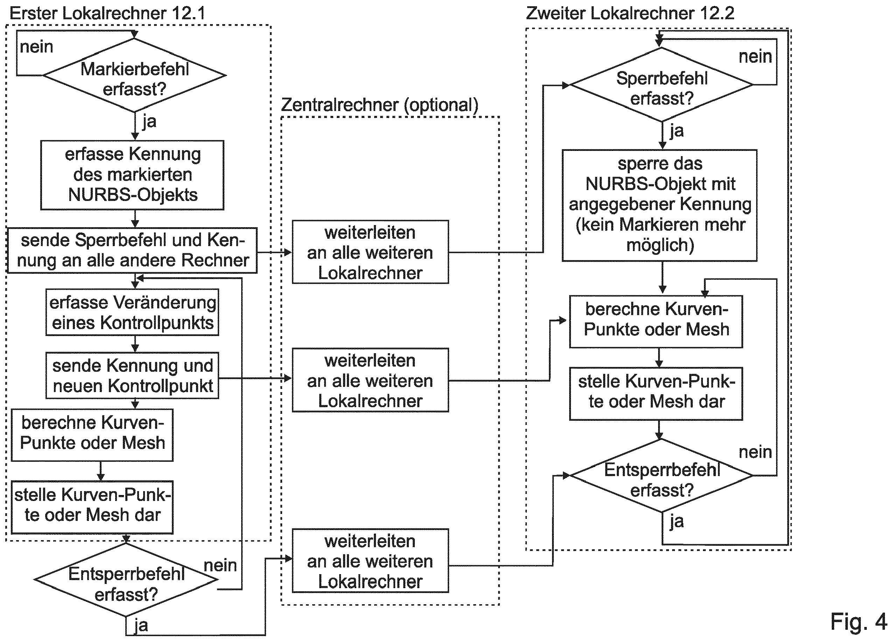

Figur 4 zeigt, wie der Sperrbefehl vom ersten Lokalrechner 12.1 zum zweiten Lokalrechner 12.2 weitergeleitet wird. Der zweite Lokalrechner 12.2 stellt jedes Mal dann, wenn er eine neue Position des gesperrten Kontrollpunkts erhält, das Mesh beziehungsweise die Kurven-Punkte neu dar. Es ist möglich, dass zeitgleich vom zweiten Lokalrechner 12.2 ein Sperrbefehl für einen anderen Kontrollpunkt des gleichen NURBS-Objekts erfasst wird. Beide Lokalrechner stellen dann kontinuierlich das Mesh beziehungsweise die Kurven-Punkte neu dar und senden einander die jeweils aktuellen Positionen der Kontrollpunkte.

**Bezugszeichenliste**

| | |
|---|---|
| 10 | Rechner-Netzwerk |
| 12 | Lokalrechner |
| 14 | Zentralrechner |
| 16 | VR-Ausgabeberät |
| 18 | Benutzer |

| | |
|---|---|
| 20 | Fahrzeug |
| 22 | Sensoreinheit |
| 24 | CPU |
| 26 | Grafikprozessor |
| 28 | Speicher |

| | |
|---|---|
| 30 | Eingabegerät |
| 32 | Positionssensoreinheit |
| 34 | virtuelles Werkzeug |

| | |
|---|---|
| F | NURBS-Fläche |
| $\varphi$ | Laufindex für NURBS-Fläche |
| $\vec{A}$ | Personen-Blickrichtung |

$\vec{P}$   Augen-Position
$\alpha$   Rollwinkel
$\beta$   Nickwinkel
$\gamma$   Drehwinkel

**Patentansprüche**

1.  Verfahren zum Darstellen von CAD-Daten, insbesondere eines Fahrzeugs (20), die zumindest ein NURBS-Objekt in Form einer NURBS-Kurve $K_\kappa$ enthalten, wobei jede NURBS-Kurve $K_\kappa$ durch einen Parametersatz definiert ist, der

    - einen Satz Kontrollpunkte $b_i$ mit i = 0, 1, ..., n,
    - einen Polynomgrad d,
    - Gewichte $w_i$ mit i = 0, 1, ..., n,
    - ein Kurvenparameterwert-Intervall $I_t$ = [$t_A$, $t_E$] eines Kurvenparameterwerts $t_\tau$ und
    - einen Trägervektor T = {$t_{r=0}$= $t_A$,..., $t_{r=R}$ = $t_E$} aufweist,

    **dadurch gekennzeichnet, dass**
    das Berechnen von Kurven-Punkten $P(t_\tau)$ von NURBS-Kurven $K_\kappa$ aus Kurvenparameterwerten $t_\tau \in I_t$ mittels eines iterativen Verfahrens erfolgt.

2.  Verfahren nach Anspruch 1, **dadurch gekennzeichnet, dass** das Berechnen von Kurven-Punkten $P(t_\tau)$ von NURBS-Kurven $K_\kappa$ aus Kurvenparameterwerten $t_\tau$ die folgenden Schritte umfasst:

    (a) Erfassen eines Kurvenparameterwerts $t_\tau$,

    (b) aus den Kontrollpunkten $b_i$ und dem Kurvenparameterwert $t_\tau$ iterativ Berechnen von deBoor-Punkten $b_\lambda^\gamma$

    aufsteigender Iterationsebenen $E_\gamma$, wobei die Zahl der deBoor-Punkte $b_\lambda^\gamma$ mit aufsteigender Iterationsebene

    abnimmt, bis die jeweilige Iterationsebene $E_{\gamma=d}$ nur noch einen deBoor-Punkt $b_{\lambda=r'}^{\gamma=d}$ enthält,
    wobei $\gamma$ = 0, ..., d ein Iterationsebenen-Nummerierungsindex ist und wobei $\lambda$ = r' - d + $\gamma$, ..., r' gilt, wobei r' der Index desjenigen Elements des Trägervektors T ist, für das gilt $t_\tau \in [t_{r=r'}, t_{r=r'+1}]$,

    (c) aus den Kontrollpunkten $b_i$, den deBoor-Punkten $b_\lambda^\gamma$ und dem Kurvenparameterwert $t_\tau$ Berechnen des Kurven-Punkts $P(t_\tau)$ und
    (d) Wiederholen der Schritte (a) bis (c) für weitere Kurvenparameterwerte $t_\tau \in I_{t'}$, sodass eine Kurvenpunktmenge

    $$(\mathcal{K} = \{ P(t_A), ..., P(t_E)\})$$

    entsteht.

3.  Verfahren nach Anspruch 2, **gekennzeichnet durch** die Schritte:

    (i) Berechnen von n deBoor-Punkten $b_\lambda^{\gamma=1}$ einer ersten Iterations-Ebene $E_{\gamma=1}$ aus den Kontrollpunkten $b_i$ und

    Speichern dieser deBoor-Punkte $b_\lambda^{\gamma=1}$,

    (ii) Berechnen von deBoor-Punkten $b_\lambda^{\gamma=2}$ einer nachfolgenden Iterations-Ebene $E_{\gamma=2}$ aus den Kontrollpunkten

    $b_\lambda^{\gamma=1}$ der vorhergehenden Iterations-Ebene $E_1$ und Speichern der so erhaltenen deBoor-Punkte $b_\lambda^{\gamma=2}$ der
    nachfolgenden Iterations-Ebene $E_2$,

(iii) Wiederholen von Schritt (ii) bis die Iterations-Ebene $E_d$ nur einen deBoor-Punkt $b_{\lambda=r\prime}^{\gamma=d}$ enthält und

(iv) Ausgeben dieses deBoor-Punkts als Kurven-Punkt $P(t_\tau)$ zum vorgegebenen Kurvenparameterwert $t_\tau$,

(v) wobei das Berechnen der deBoor-Punkte der nachfolgenden Iterations-Ebene aus den Kontrollpunkten $b_i = b_{\lambda=i}^{\gamma=0}$ oder den deBoor-Punkten $b_\lambda^\gamma$ der vorhergehenden Iterations-Ebene $E_1$ gemäß Schritt (ii) die folgenden Schritte umfasst:

(i) Multiplizieren des deBoor-Punkts $b_\lambda^\gamma$ mit $\dfrac{t-t_{r=\lambda}}{t_{r=\lambda+d-\gamma+1}-t_{r=\lambda}}$, sodass ein erstes Produkt erhalten wird,

(ii) Multiplizieren des deBoor-Punkts $b_{\lambda-1}^\gamma$ mit $\left(1 - \dfrac{t-t_{r=\lambda}}{t_{r=\lambda+d-\gamma+1}-t_{r=\lambda}}\right)$, sodass ein zweites Produkt erhalten wird,

(iii) Addieren der Produkte, sodass der deBoor-Punkt $b_\lambda^{\gamma+1}$ erhalten wird, und

(iv) Wiederholen dieser Schritte für alle deBoor-Punkte der vorhergehenden Iterations-Ebene.

4. Verfahren zum Darstellen von CAD-Daten, die zumindest ein NURBS-Objekt in Form einer NURBS-Fläche F enthalten, die durch einen Parametersatz definierbar ist, der

   - einen Satz Kontrollpunkte $b_{i,j}$ mit $i = 0, 1, ..., n$ und $j = 0, 1, ..., m$,
   - einen ersten Polynomgrad $d_1$,
   - einen zweiten Polynomgrad $d_2$,
   - Gewichte $w_{i,j}$ für jeden Kontrollpunkt $b_{i,j}$,
   - ein u-Kurvenparameterwert-Intervall $I_u = [u_A, ..., u_E]$ eines u-Kurvenparameterwerts u,
   - ein v-Kurvenparameterwert-Intervall $I_v = [v_A, ..., v_E]$ eines v-Kurvenparameterwerts v,
   - einen u-Trägervektor $T_u = \{u_{p=0}, ..., u_{p=P} = u_E\}$ und
   - einen v-Trägervektor $T_v = \{v_{q=0}, ..., v_{q=Q} = v_E\}$ aufweist,

   mit dem Schritt: Berechnen eines Meshs aus Mesh-Punkten $S(u_0,v_0)$ aus u-Kurvenparameterwerten und v-Kurvenparameterwert,
   **dadurch gekennzeichnet, dass**
   das Berechnen des Meshs aus Mesh-Punkten $S(u_0,v_0)$ mittels eines iterativen Verfahrens erfolgt.

5. Verfahren nach Anspruch 4, **dadurch gekennzeichnet, dass** das Berechnen des Meshs auf den Mesh-Punkten die folgenden Schritte aufweist:

   (A) Berechnen eines Zwischen-Punkts $Z_0(u_0)$ für einen gegebenen u-Kurvenparameterwert $u_0$, der auf einer ersten Kurve liegt, die zu einer ersten Kontrollpunkt-Gruppe $G_0=\{b_{i=0,0}, b_{0,1}, ..., b_{0,m}\}$ an Kontrollpunkten $b_{0,j}$ gehört, wobei der nullten Kontrollpunkt-Gruppe $G_0$ die Kontrollpunkte mit $i = 0$ angehören, mittels eines iterativen Verfahrens nach einem der vorstehenden Ansprüche,
   (B) Wiederholen von Schritt (A) für alle verbleibenden Kontrollpunkt-Gruppen G, sodass eine Zwischenpunkt-Menge

$$Z(u_0) = \{Z_0(u_0), ..., Z_n(u_0)\}$$

   für den gegebenen u-Kurvenparameterwert $u_0$ erhalten wird,

   (C) aus der Zwischenpunkt-Menge $Z(u_0)$ und einem gegebenen v-Kurvenparameterwert $v_0$ Berechnen eines Mesh-Punkts $S(u_0,v_0)$ mittels eines Verfahrens nach einem der vorstehenden Ansprüche,
   (D) Wiederholen von Schritt (C) für alle v-Kurvenparameterwerte einer v-Kurvenparameterwert-Menge V, mit $I_v \supset V$, sodass ein Teil-Mesh $M(u_0,v)$ erhalten wird,
   (E) Wiederholen der Schritte (A) bis (D) für alle u-Kurvenparameterwerte einer u-Kurvenparameterwert-Menge

U, mit $I_u \supset U$, sodass ein Mesh M(u,v) mit $(u,v) \in I_u \times I_v$ erhalten wird.

6. Verfahren nach Anspruch 5, **dadurch gekennzeichnet, dass** das Berechnen der Zwischen-Punkte $Z_i(u_0)$ mittels des iterativen Verfahrens die folgenden Schritte umfasst:

($\alpha$) aus den Kontrollpunkten $b_{i,j}$ der jeweiligen Kontrollpunkt-Gruppe $G_{i'}$ und dem jeweiligen u-Kurvenparameterwert u iterativ Berechnen von deBoor-Punkten $b_\lambda^\gamma$ aufsteigender Iterationsebenen $E_\gamma$,

wobei die Kontrollpunkte $b_{i,j}$ der ersten Iterationsebene $E_{\gamma=0}$ angehören und

wobei die Zahl der deBoor-Punkte $b_\lambda^\gamma$ pro Iterationsebene $E_\gamma$ mit aufsteigender Iterationsebene $E_\gamma$ ab-nimmt,

($\beta$) aus den Kontrollpunkten $b_{i,j}$ der jeweiligen Kontrollpunkt-Gruppe $G_i$, den deBoor-Punkten $b_\lambda^\gamma$ und dem jeweiligen u-Kurvenparameterwert u Berechnen des jeweiligen Zwischen-Punkts $Z_0(u)$ und

($\chi$) Wiederholen der Schritte ($\alpha$) und ($\beta$) für alle u-Kurvenparameterwerte u der u-Kurvenparameterwert-Menge $I_u$, sodass die Zwischenpunkt-Menge $Z(u)$ erhalten wird.

7. Verfahren nach einem der vorstehenden Ansprüche, **dadurch gekennzeichnet, dass** das Berechnen der Kurven-Punkte $P(t_\tau)$ und/oder der Zwischen-Punkte Z für eine Mehrzahl von NURBS-Objekten ($K_\kappa$, F) zumindest auch parallelisiert auf Grafikprozessoren durchgeführt wird.

8. Verfahren nach einem der vorstehenden Ansprüche, **gekennzeichnet durch** die Schritte:

(a) Erfassen eines Markierens eines Kontrollpunkts $b_{i,j}$ eines ausgewählten NURBS-Objekts (K, F) mittels eines ersten Lokalrechners (12.1),
(b) Senden des Sperrbefehls an zumindest einen zweiten Lokalrechner (12.2),
(c) Erfassen einer Veränderung des Kontrollpunkts $b_{i,j}$, sodass ein neuer Kontrollpunkt $b_{i,j}'$ erhalten wird, mittels des ersten Lokalrechners (12.1),
(d) Senden des veränderten Kontrollpunkts $b_{i,j}$ an den zweiten Lokalrechner (12.2) und
(e) Berechnen von Kurven-Punkten $P(t_\tau)$ und/oder des Meshs des NURBS-Objekts (K, F) gemäß einem Verfahren nach einem der vorstehenden Ansprüche 1 bis 7 auf dem zweiten Lokalrechner (12.2).

9. Verfahren nach Anspruch 8, **dadurch gekennzeichnet, dass** das Erfassen des Markierens des Kontrollpunkts die folgenden Schritte umfasst:

(a) Erfassen einer Eingabegerät-Position eines Eingabegeräts (30) (relativ zum Koordinatensystem),
(b) Darstellen eines virtuellen Werkzeugs (34) relativ zur NURBS-Fläche (F),
(c) Berechnen eines Abstands des virtuellen Werkzeugs (34) von einem Kontrollpunkt $b_i$ einer NURBS-Kurve ($K_\kappa$),
(d) Erfassen eines Markierbefehls vom Eingabegerät (30) und Markieren des Kontrollpunkts $b_i$, der den kleinsten Abstand hat, und
(e) Ermitteln eines Identifikationswerts (ID) der zugehörigen NURBS-Kurve ($K_\kappa$).

10. Verfahren nach einem der vorstehenden Ansprüche, **gekennzeichnet durch** die Schritte:

(a) Erfassen eines Erstell-Befehls für ein neues NURBS-Objekts (K, F) mittels eines ersten Lokalrechners (12.1), das
(b) Zuweisen einer Kennung zu jedem Kontrollpunkt,
(c) Senden des Parametersatzes und der Kennungen an zumindest einen zweiten Lokalrechner (12.2) und
(d) Berechnen von Kurven-Punkten $P(t_\tau)$ und/oder des neuen NURBS-Objekts (K, F) gemäß einem Verfahren nach einem der vorstehenden Ansprüche 1 bis 7 auf dem zweiten Lokalrechner (12.2).

11. Verfahren nach einem der vorstehenden Ansprüche, **gekennzeichnet durch** die Schritte:

(A) Erfassen einer Personen-Blickrichtung ($\vec{A}$) und einer Augen-Position ($\vec{P}$) einer Person (18) relativ zu einem vorgegebenen Koordinatensystem,

(B) Berechnen eines Linksaugen-Bilds aus der Personen-Blickrichtung ($\vec{A}$), der Personen-Position $\vec{P}$ und dem Mesh und/oder den Kurven-Punkten P(t$_\tau$),

(C) Berechnen eines Rechtsaugen-Bilds aus der Personen-Blickrichtung ($\vec{A}$), der Personen-Position und dem Mesh und/oder den Kurven-Punkten P(t$_\tau$) und

(D) Darstellen des Linksaugen-Bilds und des Rechtsaugen-Bilds mittels eines 3D-Darstellungsgeräts.

**12.** Verfahren nach einem der vorstehenden Ansprüche, **gekennzeichnet durch** die Schritte:

(A) Erfassen einer ersten Personen-Blickrichtung ($\overrightarrow{A1}$) und einer ersten Augen-Position ($\overrightarrow{P1}$) einer ersten Person (18.1) relativ zu einem vorgegebenen Koordinatensystem mittels des ersten Lokalrechners (12.1),

(B) Berechnen eines ersten Linksaugen-Bilds aus der ersten Personen-Blickrichtung ($\overrightarrow{A1}$), der ersten Personen-Position ($\vec{P}$) und dem Mesh und/oder den Kurven-Punkten P(t$_\tau$) mittels des ersten Lokalrechners (12.1),

(C) Berechnen eines ersten Rechtsaugen-Bilds aus der ersten Personen-Blickrichtung ($\overrightarrow{A1}$), der ersten Perso-nen- Position ($\overrightarrow{P1}$) und dem Mesh und/oder den Kurven-Punkten P(t$_\tau$) und

(D) Darstellen des ersten Linksaugen-Bilds und des ersten Rechtsaugen-Bilds mittels eines ersten 3D-Darstellungsgeräts, das mit dem ersten Lokalrechner (12.1) verbunden ist,

(E) Erfassen einer zweiten Personen-Blickrichtung ($\overrightarrow{A2}$) und einer zweiten Augen-Position ($\overrightarrow{P2}$) einer zweiten Person (18.2) relativ zu einem vorgegebenen Koordinatensystem mittels des zweiten Lokalrechners (12.2),

(F) Berechnen eines zweiten Linksaugen-Bilds aus der zweiten Personen-Blickrichtung ($\overrightarrow{A2}$), der zweiten Per-sonen-Position ($\overrightarrow{P2}$) und dem Mesh und/oder den Kurven-Punkten P(t$_\tau$) mittels des zweiten Lokalrechners (12.2),

(G) Berechnen eines zweiten Rechtsaugen-Bilds aus der zweiten Personen-Blickrichtung ($\overrightarrow{A2}$), der zweiten Personen- Position ($\overrightarrow{P2}$) und dem Mesh und/oder den Kurven-Punkten P(t$_\tau$) und

(H) Darstellen des zweiten Linksaugen-Bilds und des zweiten Rechtsaugen-Bilds mittels eines zweiten 3D-Darstellungsgeräts, das mit dem zweiten Lokalrechner (12.2) verbunden ist.

**13.** Computerprogrammprodukt, das einen Kode enthält, der ein Verfahren nach einem der vorstehenden Ansprüche kodiert, sodass das Verfahren für einen Rechner automatisch ausführbar ist.

**14.** Rechner, der

- ein VR-Ausgabegerät (16) aufweist und
- eingerichtet ist zum automatischen Durchführen eines Verfahrens nach einem der Ansprüche 1 bis 12.

**15.** Rechner-Netzwerk (10) mit

(a) einem ersten Lokalrechner (12.1), der

- ein erstes VR-Ausgabegerät (16.1) aufweist und
- eingerichtet ist zum automatischen Durchführen eines Verfahrens nach einem der Ansprüche 1 bis 12, und

(b) einem zweiten Lokalrechner (12.2), der

- ein zweites VR-Ausgabegerät (16.2) aufweist, und
- eingerichtet ist zum automatischen Durchführen eines Verfahrens nach einem der Ansprüche 1 bis 12.

$G_2 = \{b_{2,0}, b_{2,1}, b_{2,2}, b_{2,3},\}$

$b_{2,1}$    $b_{2,2}$

$b_{i=n=2,0}$    $b_{1,1}$    $b_{1,2}$    $b_{i=n=2,j=m=3}$

$b_{1,0}$    $b_{0,2}$    $b_{1,3}$

$b_2^1$    $b_3^1$

$b_{0,1}$

$b_1^1$

$b_2^2$

$b_0^0$   $b_1^2$

$b_2^3 =$
$Z_{i=0}(u_0=0{,}25, v_0=0) =$

$S(u_0=0{,}25; v_0=0)$

$Z_{i=0}(u_2=u_E=1)$

$b_{0,3}$

$G_0 = \{b_{0,0}, b_{0,1}, b_{0,2}, b_{0,3},\}$

**Fig. 1a**

$b_{2,1}$    $b_{2,2}$

$Z_2(u_0=0{,}25)$
$=S(u_0=0{,}25; v=v_E=1)$

$b_{i=n=2,0}$    $b_{1,1}$    $b_{1,2}$    $b_{i=n=2,j=m=3}$

$S(u_0=0{,}25; v_2=0{,}66)$

$Z_1(u_0=0{,}25)$

$S(u_0=0{,}75; v_2=0{,}66)$

$b_{1,0}$   $S(u_0=0{,}25; v_1=0{,}33)$    $b_{0,2}$    $b_{1,3}$

$b_{0,1}$    $S(u_0=0{,}75; v_1=0{,}33)$

$Z_{i=0}(u_1=0{,}5)$

$b_2^3 =$
$Z_{i=0}(u_0=0{,}25) =$

$Z_{i=0}(u_2=0{,}75)$

$S(u_0=0{,}25; v_0=0)$

$b_{0,0}$    $b_{0,3}$

$Z_{i=0}(u_2=u_E=1)$

**Fig. 1b**

**Fig. 1**

EP 3 594 831 A1

Fig. 2

Erfassen von
Personen-Blickrichtung und
Augen-Position
des Beobachters

↓

Darstellen des
Meshs

↑

Errechnen des
Meshs

↑

Auswahl:
Erstellen einer
NURBS-
Fläche F

↓

optional:
Auswahl der
Polynomgrade $d_1, d_2$

↓

Speichern der
Kontrollpunkte
und Kennungen

↑

Erfasse die
Eingabegerät-Position
des Eingabegeräts

← nein ── Markierbefehl
erfasst?

nein

↓

Markierbefehl
erfasst? ── ja → Füge Kontrollpunkt
hinzu, verknüpfe ihn
mit Kennung

Fig. 3

Erster Lokalrechner 12.1

```
nein ┌─────────────────┐
  ┌──│  Markierbefehl  │
  │  │    erfasst?     │
  │  └─────────────────┘
  │         │ ja
  │         ▼
  │  ┌─────────────────┐
  │  │  erfasse Kennung │
  │  │  des markierten  │
  │  │   NURBS-Objekts  │
  │  └─────────────────┘
  │         │
  │         ▼
  │  ┌──────────────────────────┐
  │  │ sende Sperrbefehl und Ken-│──────►
  │  │ nung an alle andere Rechner│
  │  └──────────────────────────┘
  │         │
  │         ▼
  │  ┌─────────────────┐
  │  │ erfasse Veränderung │
  │  │ eines Kontrollpunkts │
  │  └─────────────────┘
  │         │
  │         ▼
  │  ┌─────────────────┐
  │  │ sende Kennung und │──────►
  │  │ neuen Kontrollpunkt │
  │  └─────────────────┘
  │         │
  │         ▼
  │  ┌─────────────────┐
  │  │ berechne Kurven- │
  │  │ Punkte oder Mesh │
  │  └─────────────────┘
  │         │
  │         ▼
  │  ┌─────────────────┐
  │  │ stelle Kurven-Punk-│
  │  │ te oder Mesh dar │
  │  └─────────────────┘
  │         │
  │         ▼
  │  ┌─────────────────┐   nein
  └──│  Entsperrbefehl │──────
     │    erfasst?     │
     └─────────────────┘
          │ ja
```

Zentralrechner (optional)

```
┌─────────────────┐
│   weiterleiten  │
│ an alle weiteren │
│   Lokalrechner  │
└─────────────────┘

┌─────────────────┐
│   weiterleiten  │
│ an alle weiteren │
│   Lokalrechner  │
└─────────────────┘

┌─────────────────┐
│   weiterleiten  │
│ an alle weiteren │
│   Lokalrechner  │
└─────────────────┘
```

Zweiter Lokalrechner 12.2

```
        ┌─────────────────┐  nein
   ┌───►│   Sperrbefehl   │──────
   │    │    erfasst?     │
   │    └─────────────────┘
   │         │ ja
   │         ▼
   │  ┌──────────────────────┐
   │  │     sperre das        │
   │  │  NURBS-Objekt mit     │
   │  │ angegebener Kennung   │
   │  │ (kein Markieren mehr  │
   │  │     möglich)          │
   │  └──────────────────────┘
   │         │
   │         ▼
   │  ┌─────────────────┐
   │  │ berechne Kurven- │
   │  │ Punkte oder Mesh │
   │  └─────────────────┘
   │         │
   │         ▼
   │  ┌─────────────────┐
   │  │ stelle Kurven-Punk-│
   │  │ te oder Mesh dar │
   │  └─────────────────┘
   │         │
   │         ▼
   │    ┌─────────────────┐  nein
   └────│  Entsperrbefehl │──────
        │    erfasst?     │
        └─────────────────┘
             │ ja
```

Fig. 4

EP 3 594 831 A1

**EP 3 594 831 A1**

Europäisches Patentamt
European Patent Office
Office européen des brevets

# EUROPÄISCHER RECHERCHENBERICHT

Nummer der Anmeldung

EP 18 18 2450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Anonymous: "De Boor's algorithm - Wikipedia", , 13. Januar 2018 (2018-01-13), Seiten 1-4, XP055532683, Gefunden im Internet: URL:https://en.wikipedia.org/w/index.php?title=De_Boor's_algorithm&oldid=820243453 [gefunden am 2018-12-11] * Zusammenfassung * * Seite 2, letzter Absatz - Seite 3 * ----- | 1-6,13 | INV. G06F17/50 G06F3/0484 G03F7/20 G06F3/01 |
| X | Adarsh Krishnamurthy: "Parallel GPU Algorithms for Mechanical CAD", , 1. Januar 2010 (2010-01-01), Seiten 1-128, XP055533100, Berkeley, CA, USA Gefunden im Internet: URL:https://escholarship.org/content/qt59n1g12w/qt59n1g12w.pdf [gefunden am 2018-12-11] * Zusammenfassung * * Seite 4, Absatz 1-2 * * Seite 24, Absatz 1 - Seite 32, Absatz 1 * * Seite 36, Absatz 2 - Seite 38, letzter Absatz * ----- -/-- | 7,13 | |
| | | | RECHERCHIERTE SACHGEBIETE (IPC) G06F G03F G06T |

Der vorliegende Recherchenbericht wurde für alle Patentansprüche erstellt

| Recherchenort | Abschlußdatum der Recherche | Prüfer |
|---|---|---|
| München | 8. Juli 2019 | Sohrt, Wolfgang |

EPO FORM 1503 03.82 (P04C03)

Seite 1 von 3

Europäisches
Patentamt

European
Patent Office

Office européen
des brevets

**EUROPÄISCHER RECHERCHENBERICHT**

Nummer der Anmeldung

EP 18 18 2450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CUI YUAN-MIN ET AL: "Real-time accurate free-form deformation in terms of triangular Bézier surfaces", APPLIED MATHEMATICS-A JOURNAL OF CHINESE UNIVERSITIES, EDITORIAL COMMITTEE OF APPLIED MATHEMATICS - A JOURNAL OF CHINESE UNIVERSITIES, HEIDELBERG, Bd. 29, Nr. 4, 10. Dezember 2014 (2014-12-10), Seiten 455-467, XP035411034, ISSN: 1005-1031, DOI: 10.1007/S11766-014-3239-6 [gefunden am 2014-12-10] * Seite 460, Absatz 2 * ----- | 7,13 | |
| X | LAU R W H ET AL: "Vsculpt: a distributed virtual sculpting environment for collaborative design", IEEE TRANSACTIONS ON MULTIMEDIA, IEEE SERVICE CENTER, PISCATAWAY, NJ, US, Bd. 5, Nr. 4, 1. Dezember 2003 (2003-12-01), Seiten 520-530, XP011103233, ISSN: 1520-9210, DOI: 10.1109/TMM.2003.814795 * Zusammenfassung * * Seite 571, Spalte 2, Absatz 3 * * Seite 573, Spalte 1, Absatz 3-4 * * Seite 574, Spalte 1, Absatz 2 - Spalte 2, Absatz 2; Abbildung 3 * * Seite 574, Spalte 2, letzter Absatz - Seite 575, Spalte 2, Absatz 1; Abbildung 4 * * Seite 576, Spalte 1, letzter Absatz - Spalte 2, Absatz 2; Abbildung 6 * ----- -/-- | 8-10,13 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 8. Juli 2019 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ............................................................................
& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

## EUROPÄISCHER RECHERCHENBERICHT

**Nummer der Anmeldung**

EP 18 18 2450

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 330 785 A2 (SUN MICROSYSTEMS INC [US]) 30. Juli 2003 (2003-07-30)<br>* Absatz [0019] - Absatz [0020] *<br>* Absatz [0028] *<br>* Absatz [0030] - Absatz [0032] *<br>* Absatz [0040] - Absatz [0041] *<br>* Absatz [0016] *<br>----- | 11-15 | |
| X | WO 2017/222829 A1 (SIEMENS AG [DE]) 28. Dezember 2017 (2017-12-28)<br>* Absatz [0026] - Absatz [0027] *<br>* Absatz [0031] - Absatz [0032] *<br>* Absatz [0034] - Absatz [0036] *<br>* Absatz [0041] - Absatz [0042] *<br>* Absatz [0061] *<br>----- | 11-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. Juli 2019 | Sohrt, Wolfgang |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

```
Siehe Ergänzungsblatt B
```

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

**MANGELNDE EINHEITLICHKEIT DER ERFINDUNG ERGÄNZUNGSBLATT B**

**Nummer der Anmeldung**

EP 18 18 2450

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-7(vollständig); 13(teilweise)

   Gemeinsame Merkmale: Mathematische Methode aus Ansprüchen 1-6
   Zusätzliches Problem: Beschleunigung der Berechnung von NURBS durch Anpassung an spezifische Hardware
   Zusätzliche Merkmale: Parallele Berechnung von Kurvenpunkten auf Grafikprozessoren. Nur hier ist die iterative Ausführung von Ansprüchen 1-6 von technischem Vorteil.
   ---

2. Ansprüche: 8-10(vollständig); 13(teilweise)

   Gemeinsame Merkmale: Mathematische Methode aus Ansprüchen 1-6
   Zusätzliches Problem: Implementierung kollaborativen CADs.
   Zusätzliche Merkmale: Markierte oder erstellte Kurven-Kontrollpunkte auf einem Lokalrechner werden (ggf. mit ID und Sperrbefehl) an einen zweiten Lokalrechner weiter geleitet, der laut Beschreibung über ein Netzwerk (z.B. Internet) mit dem ersten Lokalrechner verbunden ist.
   ---

3. Ansprüche: 11, 12, 14, 15(vollständig); 13(teilweise)

   Gemeinsame Merkmale: Mathematische Methode aus Ansprüchen 1-6
   Zusätzliches Problem: VR-Darstellung
   Zusätzliche Merkmale: Auf einem oder zwei Lokalrechnern wird die Blickrichtung einer Person erfasst und entsprechend ein Linksaugen-Bild und ein Rechtsaugen-Bild von Kurvenpunkten erzeugt.
   ---

## ANHANG ZUM EUROPÄISCHEN RECHERCHENBERICHT
## ÜBER DIE EUROPÄISCHE PATENTANMELDUNG NR.

EP 18 18 2450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2019

| Im Recherchenbericht angeführtes Patentdokument | Datum der Veröffentlichung | Mitglied(er) der Patentfamilie | Datum der Veröffentlichung |
|---|---|---|---|
| EP 1330785 A2 | 30-07-2003 | AT 354836 T<br>AU 1303202 A<br>EP 1330785 A2<br>WO 0229718 A2 | 15-03-2007<br>15-04-2002<br>30-07-2003<br>11-04-2002 |
| WO 2017222829 A1 | 28-12-2017 | CN 109478103 A<br>EP 3458942 A1<br>US 2019179510 A1<br>WO 2017222829 A1 | 15-03-2019<br>27-03-2019<br>13-06-2019<br>28-12-2017 |

EPO FORM P0461

Für nähere Einzelheiten zu diesem Anhang : siehe Amtsblatt des Europäischen Patentamts, Nr.12/82